# FASCICULE DE BREVET EUROPEEN

(11) **EP 0 683 550 B1**
(45) Date de publication et mention de la délivrance du brevet: **04.08.1999**
(21) Numéro de dépôt: 95401156.5
(22) Date de dépôt: 18.05.1995
(51) Int. Cl.: H01S 3/06

(54) **Laser à fibre optique polarisé linéairement**
Faserlaser mit linearer Polarisation
Linear-polarization fiber laser

(30) Priorité: 20.05.1994 FR 9406215
(43) Date de publication de la demande: 22.11.1995
(73) Titulaire: FRANCE TELECOM, 75015 Paris (FR)
(72) Inventeur: Bayon, Jean-François, F-94230 Cachan (FR); Bernage, Pascal, F-94230 Cachan (FR); Douay, Marc, F-94230 Cachan (FR); Niay, Pierre, F-94230 Cachan (FR)
(74) Mandataire: Schmit, Christian Norbert Marie

(56) Documents cités:
- EP-A- 0 524 558
- PROC.SPIE-INT.SOC.OPT.ENG.(USA). CONFERENCE ON :" PHOTOSENSITIVITY AND SELF-ORGANIZATION IN OPTICAL FIBERS AND WAVEGUIDES, QUEBEC, CANADA, 17-18 AUGUST 1993, vol. 2044, pages 246-260, DOUAY ET AL. 'Pump power and birefringence effects in Nd3+ and Pr3+ fiber lasers using intra-core Bragg reflectors'
- IEEE PHOTONICS TECHNOLOGY LETTERS, vol. 4, no. 8, Août 1992 NEW YORK US, pages 844-846, XP 000293609 M.DOUAY ET AL. 'Birefringence effect of optical fiber laser with intracore fiber Bragg grating'
- OPTICS LETTERS., vol. 17, no. 6, 15 Mars 1992 NEW YORK US, pages 420-422, XP 000258270 G.A.BALL ET AL. 'Continuously tunable single-mode Erbium fiber laser'
- ELECTRONICS LETTERS., vol. 29, no. 12, 10 Juin 1993 ENAGE GB, pages 1112-1114, XP 000373180 E.DELAVAQUE ET AL. 'Gain control in Erbium-doped fibre amplifiers by lasing at 1480 nm with photoinduced Bragg gratings written on fibre ends'
- JOURNAL OF LIGHTWAVE TECHNOLOGY, vol. 13, no. 3, Mars 1995 NEW YORK US, pages 350-355, D.POUREUR ET AL. 'Single-polarization fiber lasers using Bragg gratings in Hi-Bi fibers'

## Description

L'invention concerne un laser à fibre optique polarisé linéairement.

Comme pour tous les lasers, il peut être intéressant dans certaines applications, voir nécessaire de disposer d'une émission polarisée linéairement selon une direction de polarisation stable.

Le laser de l'invention est donc un laser à fibre permettant d'obtenir une émission d'onde lumineuse monomode transverse polarisée linéairement. Un tel laser est applicable dans une grande variété de domaines tels que les télécommunications, les transmissions optiques, l'instrumentation, la spectroscopie, le médical, la détection d'espèces chimiques, la télémétrie.

Le rayonnement optique d'un laser émettant un faisceau monomode transverse est généralement constitué de deux groupes de modes longitudinaux polarisés orthogonalement. Ces modes ont, dans un milieu autre que le vide des fréquences de résonance différentes; l'état de polarisation de l'onde émise est aléatoire.

Dans les lasers à fibre optique des contraintes extérieures telles que pressions, vibrations, variations de température peuvent provoquer des variations d'indice et des couplages de polarisations. Cela peut faire varier temporellement la puissance sur chaque polarisation de sorte qu'il suffit d'un polariseur pour obtenir un faisceau polarisé. La puissance en sortie du polariseur peut être sujette à des variations aléatoires même si la puissance globale en sortie du laser (avant le polariseur) reste constante.

Par ailleurs les phénomènes de couplages modifient les fréquences de résonance des groupes de modes longitudinaux de façon non contrôlée. Cet effet s'avère gênant pour toutes les applications des lasers dans lesquelles la fréquence de l'émission doit rester fixe au cours du temps.

Dans certains types de laser, l'émission est naturellement, ou peut être facilement rendue, polarisée. Il s'agit de cavités qui présentent un gain différentiel sur les deux modes propres de polarisation. Un exemple bien connu d'émission polarisée est celui des lasers à semi-conducteurs (GaALAs), pour lesquels l'anisotropie de gain due à la structure du guide d'onde, associée au caractère homogène des transitions mises en jeu, assure une émission polarisée. Un autre exemple d'émission artificiellement polarisée est celui des lasers à gaz avec lames de Brewster fermant l'élément actif gazeux, ces lames servant à la fois à éviter des cavités parasites et à introduire une perte différentielle suffisante sur les deux modes de polarisation linéaire (les lasers à gaz ayant des gains très faibles, une petite différence de pertes suffit).

Le cas des lasers à fibres dopées aux terres rares est plus particulier. Tout d'abord, les raies d'émission ont à température ambiante une composante inhomogène prédominante, ce qui autorise l'oscillation simultanée de plusieurs longueurs d'onde et modes de polarisation. Il ne suffit donc pas d'introduire dans ces milieux un faible gain différentiel sur les états propres de polarisation pour assurer une émission polarisée rectilignement selon une direction stable (une émission monopolarisation se produit en fait dans la zone de pompage comprise entre les seuils correspondant aux deux polarisations, mais elle n'est pas exploitable en pratique). D'autre part, sur une fibre classique, l'état de polarisation de l'onde laser est très sensible aux paramètres extérieurs et peut varier rapidement et de manière aléatoire.

La présente invention a pour objet de résoudre ces inconvénients.

Le document Proc. SPIE, August 1993, vol. 2044, pages 246-260 divulgue un laser a fibre selon le préambule de la revendication 1.

L'invention concerne donc un laser à fibre optique polarisé linéairement dans lequel la fibre est une fibre biréfringente à conservation de polarisation et possède à chacune de ses extrémités un réseau de Bragg photo-inscrit.

Les longueurs d'onde de Bragg de ces réseaux peuvent être sensiblement égales. Les deux réseaux peuvent également être inscrits dans des conditions différentes. Dans ce cas les deux réseaux sont réalisés de façon à présenter des écarts entre les pics de résonance des longueurs d'onde de Bragg correspondant aux deux modes de polarisation qui sont supérieurs à la largeur de bande du réseau correspondant pour réaliser une émission monopolarisante.

Pour sortir une polarisation déterminée on met er coïncidence pour les deux réseaux les longueurs d'ondes de Bragg correspondant à une même polarisation.

Selon une autre variante on peut également prévoir un dispositif de rotation de polarisation de π/2.

Dans ce cas on met en coïncidence la longueur d'onde de Bragg correspondant à une première polarisation dans un réseau avec la longueur d'onde de Bragg correspondant à une deuxième polarisation orthogonale à la première dans l'autre réseau.

D'autres particularités et avantages de l'invention apparaîtront à la lecture de la description qui est faite et qui est donnée à titre d'exemple illustratif et non limitatif en référence aux figures annexées qui représentent :
- la figure 1, un exemple de réalisation du laser à fibre optique selon l'invention;
- les figures 2 et 3 des courbes caractéristiques de laser connu et du laser selon l'invention.

Selon l'invention on prévoit tout d'abord de stabiliser et de traiter séparément les polarisations. Pour cela on utilise une fibre biréfringente à conservation de polarisation. A titre d'exemple on prévoit une fibre de biréfringence supérieure à 10⁻⁴. La dégénérescence entre modes de polarisations (linéaires) est alors suffisamment élevée pour que le couplage entre ces modes soit négligeable dans des conditions usuelles d'utilisation de la fibre.

Cependant une faible différence de gain ne suffit pas à assurer une émission polarisée linéairement lorsque le taux de pompage est élevé.

Selon l'invention on prévoit de supprimer la cavité pour l'un des deux modes de polarisation.

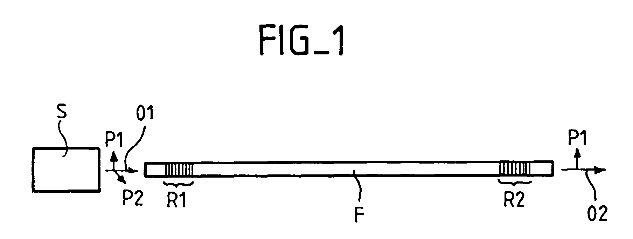

La figure 1 fournit un exemple de réalisation de l'invention.

Une fibre optique F biréfringente est munie à chacune de ces extrémités d'un réseau photo-inscrit R1, R2 (ou photo-induit).

La réalisation d'un tel réseau est connue dans la technique. Elle met en oeuvre l'interférence de deux ondes optiques. La figure d'interférences crée des strates d'indice.

Les réseaux R1 et R2 sont réalisés de façon à ne fermer la cavité optique que pour une seule polarisation. Ces réseaux fonctionnent dans des conditions de Bragg et remplissent comme cela est connu dans la technique des rôles de miroirs de la cavité.

Les longueurs d'ondes de résonance d'un réseau photo-inscrit sont différentes pour chacun des axes de biréfringence et cette différence peut être rendue supérieure à la largeur de bande du réseau. En maîtrisant par un procédé adéquat les longueurs d'ondes de résonance de chacun des réseaux et en configurant la cavité (principalement en ce qui concerne l'évolution des états de polarisation) on parvient à réaliser une émission monopolarisation stable en puissance.

Il est donc nécessaire d'obtenir un accord de fréquence entre les deux réseaux fermant la cavité laser pour un des états propres de polarisation tout en assurant que ces réseaux seront désaccordés pour l'autre état propre de polarisation.

Dans les réalisations particulières décrites ci-après la fonction de miroir de la cavité est donc réalisée par des réseaux photo-inscrits. Un moyen essentiel caractéristique est donc la fabrication et l'utilisation d'une cavité sélective à la polarisation. Un deuxième point critique est la stabilité des états propres de polarisation vis à vis des perturbations extérieures. On utilisera pour cela une fibre à biréfringence linéaire.

Les deux réseaux photo-inscrits R1, R2 ont selon un mode de réalisation le même pas mais ils peuvent être choisis pour ne pas avoir la même longueur d'onde de Bragg.

Cependant le même réseau physique peut avoir une résonance pour une polarisation X et une résonance pour la polarisation Y. Il y a un écart entre les deux longueurs d'ondes de Bragg pour les deux polarisations et cela pour un réseau déterminé. Dans ce qui va suivre on va maintenant faire varier ou changer cet écart pour les deux réseaux R1 et R2 en modifiant les conditions d'inscription des deux réseaux.

Les deux réseaux sont conçus pour avoir des longueurs d'ondes de Bragg très légèrement différentes. Dans ce cas l'un des réseau R1 aura pour longueur d'onde de Bragg λ1 et l'autre réseau R2 aura pour longueur d'onde de Bragg λ2. L'onde optique se propage dans la fibre avec deux polarisations orthogonales X et Y. Les deux réseaux ont alors leur longueur d'onde de Bragg très légèrement décalée en longueur d'onde de Bragg moyenne.

Plus précisément on peut réaliser les réseaux R1 et R2 de telle façon que les écarts entre les deux pics de résonance des longueurs d'onde de Bragg des deux polarisations X et Y soient suffisants pour les deux réseaux. C'est à dire que si pour le premier réseau R1 on a un écart Δλ1 entre les résonances de Bragg pour les polarisations X et Y, cet écart est Δλ2 entre les résonances de Bragg pour les polarisations X et Y dans le réseau R2 avec Δλ2 différent de Δλ1. Le terme "suffisants" signifie que les écarts entre les deux pics de résonance des longueurs d'onde de bragg des deux polarisations x et y sont supérieurs à la largeur de bande du réseau.

Ne sont alors mises en coïncidence entre les deux réseaux que la longueur d'onde de Bragg pour une polarisation déterminée (X par exemple) dans un réseau avec la longueur d'onde de Bragg pour la même polarisation dans l'autre réseau.

Dans ces conditions les longueurs d'ondes de Bragg pour l'autre polarisation (polarisation Y) ne peuvent pas être mises en coïncidence pour les deux réseaux.

Selon un autre mode de réalisation on fait tourner les polarisations X et Y de π/2 entre les deux réseaux R1 et R2 au sein de la fibre. Cela peut se faire à l'aide d'un filtre jouant le rôle d'un rotateur de polarisation ou bien en coupant la fibre et en réalisant la jonction des deux morceaux coupés au même endroit en faisant tourner les deux morceaux l'un par rapport à l'autre de 90° par rapport à un axe perpendiculaire au plan de la section droite . De plus dans ce mode de réalisation les réseaux R1 et R2 sont réalisés de telle façon que l'on décale légèrement les longueurs d'onde de Bragg moyennes et que l'on fait coïncider la résonance de la polarisation X du réseau R1 avec la résonance Y du réseau R2. On obtient ainsi une meilleure résolution sur les polarisations.

Selon un autre mode de réalisation on prévoit de réaliser les réseaux R1 et R2 de façon à ce que leur taux de réflexion soit nul pour une polarisation X et maximum pour une polarisation Y (ou inversement).

La fibre utilisée peut être une fibre à structure dissymétrique. Par exemple une fibre à coeur de section droite elliptique. Les réseaux R1 et R2 sont réalisés par interférence de deux ondes lumineuses et par irradiation à l'aide d'un rayonnement ultra violet. Le temps d'irradiation des deux réseaux est calculé de façon à obtenir pour les deux réseaux un facteur de réflectivité maximale pour une polarisation. Le laser sera donc polarisé linéairement puisque pour l'autre polarisation il n'y aura pas de cavité.

Sur la figure 1 on a donc représenté la fibre biréfringente avec ces deux réseaux R1, R2. Une source optique (laser) fournit une onde de pompe O1 présentant deux polarisations orthogonales P1 et P2. Comme cela est décrit précédemment la fibre optique F fournit en sortie un faisceau O2 polarisé linéairement selon P1 par exemple.

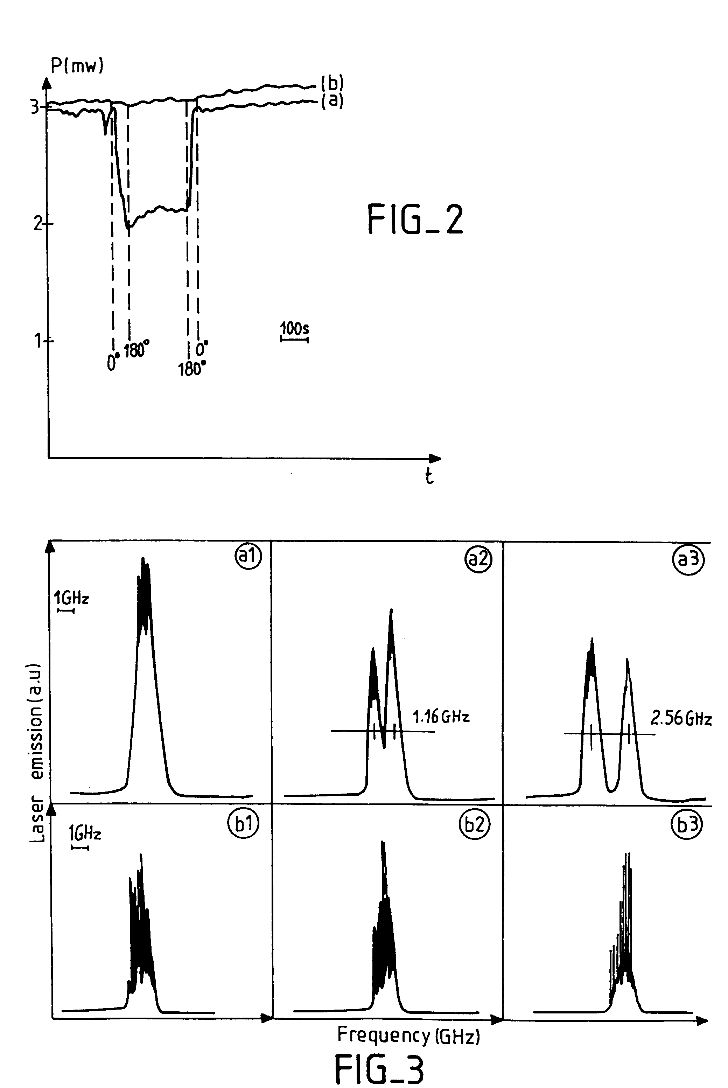

Le dispositif selon l'invention a donné lieu à des expérimentations. Les figures 2 et 3 montrent deux exemples d'évolution des caractéristiques de l'émission laser dans une configuration classique dans la technique (courbes "a") et dans une configuration stabilisée selon l'invention (courbe "b").

Dans chacun des cas on fait varier un paramètre extérieur (il s'agit pour cette expérience d'une contrainte intra-cavité).

La figure 2 fournit des courbes de la puissance émise par le laser pompé en fonction du temps.

La figure 3 fournit des diagrammes d'émission en fréquences.

La courbe "a" sur la figure 2 présente une forte variation de puissance. Les courbes a1 a2 a3 de la figure 3 présentent de fortes variations de la longueur d'onde d'oscillation.

Par contre la courbe b correspondant à l'invention met en évidence sur la figure 2 une stabilité en puissance et les courbes b1 b2 b3 sur la figure 3 révèlent une émission stable en longueurs d'onde.

Il est donc ainsi clairement démontré que le laser à fibre selon l'invention peut délivrer une émission polarisée linéairement selon une direction stable et de puissance constante (> à 1mW). Il est à noter que la méthode utilisée est entièrement compatible avec les réalisations de lasers monofréquences (une seule résonance longitudinale).

Les coefficients de réflexion et la longueur d'onde de résonance d'un réseau photo-inscrit dans une fibre à forte biréfringence linéaire diffère selon que la lumière est polarisée parallèlement à l'axe rapide ou à l'axe lent. Les courbes (b des figures 2 et 3) ont été obtenues en inscrivant dans une fibre biréfringente des réseaux avec des conditions expérimentales différentes.

Par exemple une légère traction sur l'un des réseaux permet d'obtenir l'accord pour l'une des polarisations tout en étant hors résonance pour la polarisation orthogonale et on maintient la traction pour conserver cette différence.

La fibre biréfringente peut être une fibre à coeur asymétrique. Elle peut être aussi une fibre à contrainte asymétrique connue dans la technique, sa structure étant telle que des contraintes s'exercent de façon asymétrique sur le coeur ce qui occasionne des différences d'indice créant des axes de propagation de vitesses différentes appelées axe rapide et axe lent.

A titre d'exemple la gaine optique de la fibre peut être dopée localement avec du bore ce qui modifie les coefficients de dilatation de la gaine. Le coeur de la fibre peut être dopé avec du germanium ce qui permet l'inscription d'un réseau, de modifier les coefficients de dilatation thermique et donc d'augmenter la dissymétrie des contraintes.

## Revendications

1. Laser à fibre pompée par une onde optique, polarisé linéairement, comprenant une fibre optique biréfringente (F) possédant à chacune de ses extrémités un réseau de Bragg photo-inscrit (R1, R2) et présentant deux modes de polarisation orthogonaux caractérisé en ce que la fibre optique, possède une très forte biréfringence, supérieure à 10⁻⁴ et en ce que les deux réseaux (R1, R2) sont réalisés de façon à présenter des écarts entre les deux pics de résonnance des longueurs d'onde de Bragg correspondant aux deux modes de polarisation qui sont supérieurs à la largeur de bande du réseau correspondant pour réaliser une émission monopolarisante.

2. Laser à fibre optique selon la revendication 1, caractérisé en ce que les longueurs d'onde de Bragg moyennes des deux réseaux sont décalées de façon à ne mettre en coïncidence pour les deux réseaux que les longueurs d'ondes de Bragg correspondant à un même mode de polarisation.

3. Laser à fibre optique selon la revendication 1, caractérisé en ce qu'il comporte un dispositif de rotation de polarisation de π/2 permettant de faire tourner de π/2 les polarisations .

4. Laser à fibre optique selon la revendication 3, caractérisé en ce que les deux réseaux sont réalisés de façon à faire coïncider la résonance d'une première polarisation dans un premier réseau R1 avec la résonance d'une deuxième polarisation perpendiculaire à la première dans le deuxième réseau R2.

5. Laser à fibre optique selon l'une quelconques des revendications précédentes, caractérisé en ce que les deux réseaux présentent des coefficients de réflectivité différents pour deux modes de polarisation orthogonaux.

6. Laser à fibre optique selon la revendication 5, caractérisé en ce que les coefficients de réflectivité pour un premier mode de polarisation sont maximun dans les deux réseaux et qu'ils sont minimun pour un deuxième mode de polarisation orthogonal au premier mode.

7. Laser à fibre optique selon la revendication 1, caractérisé en ce que la fibre est une fibre à structure dissymétrique et/ou supportant des contraintes asymétriques.

## Patentansprüche

1. Faserlaser, gepumpt durch eine Lichtwelle mit linearer Polarisation, eine doppelbrechende optische Faser (F) umfassend, die an jedem ihrer Enden ein photo-induziertes Bragg-Gitter (R1, R2) besitzt und zwei zueinander rechtwinklige Polarisationsmoden aufweist,
**dadurch gekennzeichnet,**
daß die optische Faser eine sehr starke Doppelbrechung hat, größer als 10⁻⁴, und dadurch, daß die beiden Gitter (R1, R2) so realisiert sind, daß sie Abstände zwischen den beiden Resonanzpeaks der den beiden Polarisationsmoden entsprechenden Bragg-Wellenlängen aufweisen, die größer als die Bandbreite des entsprechenden Gitters sind, um eine monopolarisierende Emission zu realisieren.

2. Faserlaser nach Anspruch 1, dadurch gekennzeichnet, daß die mittlere Bragg-Wellenlängen der beiden Gitter so versetzt sind, daß für die beiden Gitter nur die Bragg-Wellenlängen zur Koinzidenz gebracht werden, die derselben Polarisationsmode entsprechen.

3. Faserlaser nach Anspruch 1, dadurch gekennzeichnet, daß sie eine π/2-Polarisationsrotationsvorrichtung umfassen, die ermöglicht, die Polarisationen um π/2 zu drehen.

4. Faserlaser nach Anspruch 3, dadurch gekennzeichnet, daß die beiden Gitter so realisiert sind, daß sie die Resonanz einer ersten Polarisation in einem ersten Gitter R1 zur Koinzidenz bringen mit der Resonanz einer zweiten, zur ersten senkrechten Polarisation in dem zweiten Gitter R2.

5. Faserlaser nach einem der vorangehenden Ansprüche, dadurch gekennzeichnet, daß die beiden Gitter für zwei zueinander rechtwinklige Polarisationsmoden unterschiedliche Reflektivitätskoeffizienten aufweisen.

6. Faserlaser nach einem der vorangehenden Ansprüche, dadurch gekennzeichnet, daß die Reflektivitätskoeffizienten für eine erste Polarisationsmode in den beiden Gittern maximal sind und für eine zweite, zur ersten Mode rechtwinkligen Polarisationsmode minimal sind.

7. Faserlaser nach Anspruch 1, dadurch gekennzeichnet, daß die Faser eine Faser mit dissymmetrischer Struktur ist und/oder asymmetrische Spannungen aushält.

## Claims

1. A linearly-polarised fibre laser pumped by an optical wave comprising a birefringent optical fibre (F) having a Bragg grating (R1, R2) photo-inscribed at each of its ends and having two orthogonal polarisation modes, characterised in that the optical fibre has a very high birefringence, in excess of 10⁻⁴, and in that the two gratings (R1, R2) are arranged so that there are gaps between the two resonance peaks of the Bragg wavelengths corresponding to the two polarisation modes, which are greater than the bandwidth of the corresponding grating so as to perform a mono-polarising transmission.

2. An optical-fibre laser as claimed in claim 1, characterised in that the mean Bragg wavelengths of the two gratings are offset so that only the Bragg wavelengths corresponding to a same polarisation mode coincide with respect to the two gratings.

3. An optical-fibre laser as claimed in claim 1, characterised in that it has a π/2 polarisation rotation device to enable the polarisations to be rotated by π/2.

4. An optical-fibre laser as claimed in claim 3, characterised in that the two gratings are arranged so as to cause the resonance of a first polarisation in a first grating R1 to coincide with the resonance of a second polarisation perpendicular to the first in the second grating R2.

5. An optical-fibre laser as claimed in any one of the preceding claims, characterised in that the two gratings have different coefficients of reflectivity for two orthogonal polarisation modes.

6. An optical-fibre laser as claimed in claim 5, characterised in that the coefficients of reflectivity for a first polarisation mode are maximum in the two gratings and in that they are minimum for a second polarisation mode orthogonal to the first mode.

7. An optical-fibre laser as claimed in claim 1, characterised in that the fibre is a fibre with a dissymmetrical structure and/or withstanding asymmetrical stress.
